# EUROPÄISCHE PATENTSCHRIFT

(11) **EP 1 401 574 B1**
(45) Veröffentlichungstag und Bekanntmachung des Hinweises auf die Patenterteilung: **06.12.2006**
(21) Anmeldenummer: 02758085.1
(22) Anmeldetag: 03.07.2002
(51) Int. Cl.: B01J 31/12, B01J 31/28, H01M 4/90

(54) **PLATINFREIES CHELAT-KATALYSATORMATERIAL FÜR DIE SELEKTIVE SAUERSTOFFREDUKTION UND VERFAHREN ZU SEINER HERSTELLUNG**
PLATINUM-FREE CHELATE-CATALYST MATERIAL FOR THE SELECTIVE REDUCTION OF OXYGEN AND METHOD FOR PRODUCTION THEREOF
MATERIAU CATALYSEUR AU CHELATE, EXEMPT DE PLATINE, POUR REDUCTION SELECTIVE PAR L'OXYGENE, ET SON PROCEDE DE FABRICATION

(30) Priorität: 03.07.2001 DE 10132490
(43) Veröffentlichungstag der Anmeldung: 31.03.2004
(73) Patentinhaber: Hahn-Meitner-Institut Berlin GmbH, 14109 Berlin (DE)
(72) Erfinder: HILGENDORFF, Marcus, 30539 Hannover (DE); DORBANDT, Iris, 13597 Berlin (DE); SCHULENBURG, Hendrik, 15749 Kiekebusch (DE); BRON, Michael, 64285 Darmstadt (DE); FIECHTER, Sebastian, 14109 Berlin (DE); BOGDANOFF, Peter, 14193 Berlin (DE); TRIBUTSCH, Helmut, 14109 Berlin (DE)
(74) Vertreter: Rudolph, Margit
(86) Internationale Anmeldenummer: PCT/DE2002/002496
(87) Internationale Veröffentlichungsnummer: WO 2003/004156

(56) Entgegenhaltungen:
- US-B1- 6 245 707
- CONTAMIN O., DEBIEMME-CHOUVY C., SAVY M., SCARBECK G,: "Oxygen electroreduction catalysis: effect of sulfur addition on cobalt tetraazaannulene precursors" ELECTROCHIMICA ACTA, Bd. 45, 1999, Seiten 721-729, XP002229708 in der Anmeldung erwähnt
- LEFEVRE M., DODELET J.P., BERTRAND P.: "O2 reduction in PEM fuel cells: activity site structural information for catalysts obtained by the pyrolysis at high temperature of Fe precursors" J. PHYS. CHEM. B, Bd. 104, 2000, Seiten 11238-11247, XP002229709 in der Anmeldung erwähnt

## Beschreibung

Die Erfindung bezieht sich auf ein platinfreies Chelat-Katalysatormaterial gemäß Anspruch 1 und auf ein Verfahren zu seiner Herstellung.

Ein Hauptfeld der Anwendung von Katalysatoren bilden die elektrochemischen Zellen und hier insbesondere die emissionsfreien Brennstoffzellen, mit denen elektrischer Strom durch Umwandlung der chemischen Energie einer Brennstoff-Oxidationsreaktion in elektrische Energie ohne den Umweg über die Wärmeproduktion effizient und umweltfreundlich erzeugt werden. Die Brennstoffzelle ist besonders effizient, wenn Wasserstoff in elektrische Energie umgewandelt wird. Unter den vielfältigen Typen von Brennstoffzellen ist die Polymer-Elektrolyt-Membran (PEM) Brennstoffzelle hervorzuheben, die hervorragend für den Betrieb mit Wasserstoff /Sauerstoff bzw. Wasserstoff/Luft geeignet ist. Das Problem hierbei ist jedoch die geringere Energiedichte von Wasserstoff, weshalb zunehmend Methanol als Treibstoff für mobile Anwendungen eingesetzt wird. Das Methanol kann einerseits an Bord eines Fahrzeuges katalytisch in Wasserstoff und Kohlendioxid zersetzt werden (indirekte Methanol - Brennstoffzelle) oder andererseits direkt an der Anode oxidiert werden. Dabei ist die direkte Methanol / Luft -Brennstoffzelle (DMFC) technisch am einfachsten zu verwirklichen und kann deshalb als eine sehr vielversprechende elektrochemische Energiequelle für Kleingeräte und Elektromotoren angesehen werden. Als Katalysatormaterial für die Anode in DMFC's werden bisher hauptsächlich gemischte Platin / Ruthenium-Schwämme oder sogenannte "Trägerkatalysatoren" verwendet, bei denen feinste Metallpartikel auf einem leitfähigen Trägermaterial wie Ruß oder Graphit abgeschieden werden. Als Kathodenkatalysator wird reines Platin oder geträgertes Platin verwendet. Reines Platin wirkt katalytisch jedoch nicht selektiv und es treten deshalb Probleme auf, wenn Methanol als Treibstoff verwendet wird. Kathode und Anode werden zwar durch eine protonenleitende Membran als Konnektor zwischen Anode und Kathode getrennt, diese ist jedoch durchlässig für Methanol und dieses kann zur Kathode gelangen, an der es ebenfalls oxidiert wird. Dadurch wird die Kathode, die der Luftsauerstoffreduktion dienen soll, depolarisiert und es treten Leistungseinbußen auf.

Die vorliegende Erfindung liegt auf dem Gebiet von platinfreien Katalysatormaterialien, welche selektiv Sauerstoff reduzieren und daher gegen Alkanole resistent sind, und hier insbesondere in der Gruppe der Chelat-Katalysatormaterialien. Bei einem Chelat handelt es sich um eine katalytisch sehr aktive Komplexverbindung höherer Ordnung, bei der ein zentrales Metallion unter Ausbildung mehrerer Bindungen von einem oder mehreren Molekülen oder Ionen ringartig umgeben ist. Verschiedene platinfreie, Methanol-resistente Chelat-Katalysatormaterialien in geträgerter und in ungeträgerter Form werden bereits in der wissenschaftlichen Literatur beschrieben. Jedoch befinden sich bisher keine der im Folgenden beschriebenen, bekannten Katalysatormaterialtypen in einer technischen Anwendung, da deren katalytische Aktivität und Stabilität als nicht ausreichend zu beurteilen sind. Essentiell für technische Anwendungen ist die Anwesenheit von hochleitfähigem Kohlenstoff mit großer spezifischer Oberfläche. Bei der Hochtemperaturreaktion der Chelate führt dies nicht nur zu einer verbesserten Aktivität, sondern erhöht auch die Stabilität des Katalysatormaterials. Dabei ist zu unterscheiden zwischen einer direkten Zufuhr von leitfähigem Kohlenstoff, beispielsweise in Form von Ruß, und einer in-situ-Herstellung der Kohlenstoffmatrix durch die Polymerisation von geeigneten organometallischen Chelaten, auf die sich auch die Erfindung bezieht.

Für die in-situ-Herstellung der Kohlenstoffmatrix sind dem Übersichtsartikel **[I]** "Direct methanol - air fuel cells for road transportation" (B.D. McNicol et al., Journal of Power Sources 83 (1999) pp. 15-31) Katalysatormaterialien mit unedlen Metallen für einen Einsatz in DFMC offenbart (Kap. 4.5.2). Es werden Alternativen der Präparation von organometallischen Chelaten wie Eisen- oder Kobaltporphyrinen und Phtalocyaninen sowie Tetra-azo-annulenen beschrieben. Hier ist beispielsweise bei einem Metall-Tetraphenyl-Porphyrin als aktives Chelat ein Metallion von vier Stickstoffionen (MeN₄) umgeben, die jeweils in einen Monopyrrolring eingebunden sind. Dabei ist die katalytische Aktivität von diesen Verbindungen für die Sauerstoffreduktion ebenfalls schon länger bekannt. Verschiedene in den Chelaten eingesetzte Übergangsmetalle führen zu unterschiedlichen Ergebnissen. So kann bei einem Einsatz von Kobalt eine deutliche Aktivitätssteigerung festgestellt werden, wohingegen bei einem Einsatz von Eisen eine deutliche Stabilitätssteigerung zu vermerken ist. Auch wenn zum Teil über eine sehr gute katalytische Aktivität berichtet wird, zeigen diese Materialien bisher jedoch auch keine ausreichende Stabilität für die Anwendungen in Brennstoffzellen.

In der Veröffentlichung **[II]** von Contamin et al. wird über die Präparation eines Kobalt-haltigen Elektrokatalysators durch Pyrolyse von Kobalttetraazaannulen in Gegenwart eines aktiven Holzkohlerußes berichtet (vgl. O. Contamin, C. Debiemme-Chouvy, M. Savy and G. Scarbeck: "Oxygen electroreduction catalysis: effect of sulfur addition on cobalt tetraazaannulene precursors", Electrochimica Acta 45 (1999) pp. 721-729). Die Autoren beobachteten bei Zugabe von Thioharnstoff zum Präparationsansatz eine deutliche Steigerung der Aktivität des Katalysators. Das aktive Zentrum besteht aus zwei sich gegenüberliegenden Kobaltatomen, die über C-S-Brücken an das Kohlenstoffgerüst gebunden sind.

Bei dem in der **JP 59138066** beschriebenen Katalysatormaterial wird die Herstellung durch Mischung von Übergangsmetallverbindungen mit Kobalt, Kupfer, Nickel, Molybdän und/oder Zinn mit Eisen, Harnstoff und beispielsweise einem Pyromellitinsäureanhydrid mit anschließender Temperaturbehandlung in Gegenwart eines leitfähigen Kohlenstoffsubstrates beschrieben. Dadurch entsteht ein Metall-Phtalocyanin-Polymer mit einer Integration der eingesetzten unterschiedlichen Übergangsmetalle, die als Kerne in die Metallchelate eingebunden sind. Dieses Material wird für die Anwendung in alkalischen Brennstoffzellen vorgeschlagen. In Bezug auf den parallelen Einsatz von mehreren verschiedenen Übergangsmetallen ist noch eine wissenschaftliche Arbeit zu erwähnen, die über die katalytische Aktivität von ungeträgerten Mischungen aus Kobalt-Tetraphenylporphyrin (CoTPP) und Eisen-Tetraphenylporphyrin (FeTPP) berichtet. Gemäß der Veröffentlichung **[III]** von R. Jiang und D. Chu ("Remarkably Active Catalysts for the Electroreduction of O₂ to H₂O for Use in an Acidic Electrolyte Containing Concentrated Methanol" Journal of the Electrochemical Society 147 (12), pp. 4605-4609 (2000)) hat die bei 600°C unter Argon behandelte binäre Mischung von CoTPP und FeTPP in elektrochemischen Messungen eine erhöhte katalytische Aktivität gegenüber den reinen, Temperatur behandelten Substanzen gezeigt. Die Struktur des Materials ist jedoch relativ kompakt und zeigt keine größere Porosität.

In der Patenschrift **US 6 245 707** werden Methanol-tolerante Elektrokatalysatoren für die Sauerstoffreduktion auf der Basis von Stickstoffchelaten mit mindestens zwei verschiedenen Übergangsmetallen (z.B. Metalltetraphenylporphyrine) beschrieben, die durch eine thermische Behandlung in Gegenwart eines Kohlenstoffträgers in einen aktiven Kathodenkatalysator zum Einsatz in der Niedertemperaturbrennstoffzelle überführt werden.

Aus dem Aufsatz **[IV]** "Oxygen reduction catalysts for polymer electrolyte fuel cells from the pyrolysis of Fe" acetate adsorbed on 3,4,9,10-perylenetetracarboxylic dianhydrid" von G. Faubert et al. (Electrochimica Acta 44(1999) pp. 2589-2603) ist zur Herstellung eines Chelat-Katalysatormaterials das Mischen von einem Eisensalz (Eisenacetat) mit Perylentetrakarboxyanhydrid (PTCDA) und anschließender Temperaturbehandlung unter Ammoniak (NH₃)-Gas bekannt. Durch das PTCDA wird eine poröse, leitfähige Kohlenstoffmatrix erzeugt und durch NH₃ wird Stickstoff eingeführt. Insbesondere wird in diesem Artikel in der Einleitung darauf hingewiesen, dass zur Erzeugung eines stabilen unedlen metallbasierten Katalysatormaterials ein aus einem Salz hervor gegangenes Übergangsmetall, wie Fe oder Co, sowie eine Stickstoff- und eine Kohlenstoffquelle erforderlich sind. Diese kann insbesondere in-situ durch Polymerisation der Kohlenstoffquelle realisiert sein.

Ein weiterer **Stand der Technik** wird in dem Aufsatz **[V]** "O₂ Reduction in PEM Fuel Cells : Activity und Active Site Structural Information for Catalysts Obtained by Pyrolysis at High Temperature of Fe Precursors" von M. Lefèvre et al. (J. Phys. Chem. B (2000)) beschrieben. Fe"-Acetat als Precursorverbindung wird hier mit PTCDA als organische Verbindung unter Anwesenheit von NH₃ als Stickstoff-Precursorverbindung gemischt und unter Hochtemperatur oberhalb von 800°C pyrolisiert. Durch Polymerisation des metall- und stickstofffreien PTCDA entsteht in-situ eine poröse, leitfähige Kohlenstoffmatrix, in die einzelne Eisenatome als Elektronengeber und Eisenchelat, das durch jeweils vier Stickstoffatome koordiniert ist, adsorptiv eingebunden sind. Dem Aufsatz ist zu entnehmen, dass über den Gehalt an Eisen und über die Pyrolysetemperatur die Katalyseaktivität des Chelat-Katalysatormaterials beeinflussbar sind. Diese ist aber für kommerzielle Anwendungen noch nicht ausreichend, was auch auf der relativ geringen erreichten Porosität basiert. Weiterhin kann keine ausreichende Stabilität erreicht werden. Außerdem müssen bei der Synthese neben dem Übergangsmetallsalz sowohl ein Matrixbildner als auch ein davon getrennter Stickstoffgeber eingesetzt werden.

**Aufgabe** für die vorliegende Erfindung ist es daher, ein platinfreies Chelat-Katalysatormaterial der eingangs genannten Gattung anzugeben, das eine besonders hohe katalytische Aktivität und Stabilität aufweist, sodass es für kommerzielle Anwendungen besonders geeignet ist. Dabei sollen in erster Linie die aus dem Stand der Technik gewonnenen Erkenntnisse über die Auswirkungen verschiedener Übergangsmetalle und der erzielbaren Porosität berücksichtigt werden. Daneben soll das erfindungsgemäße Chelat-Katalysatormaterial möglichst wenige Komponenten aufweisen und einfach in nur wenigen Herstellungsschritten auch großtechnisch herstellbar sein.

Die **Lösung** für diese Aufgabe ist das platinfreie Chelat-Katalysatormaterial gemäß Anspruch 1.

Bei dem erfindungsgemäßen Chelat-Katalysatormaterial wird aus dem stickstoffhaltigen organometallischen Übergangskomplex durch Polymerisation ein Kohlenstoffgerüst mit einer Strukturierung bis in den Nanometer-Bereich herausgebildet. Das Kohlenstoffgerüst ist dabei durch eingebundene Ionen von zumindest zwei Übergangsmetallen sowohl elektrisch leitfähig als auch mit katalytischen Reaktionszentren durchsetzt. Die eingebundenen Übergangsmetallionen wirken primär als Elektronengeber für die Reaktionszentren, welche aus dem weiteren Übergangsmetall in dem stickstoffhaltigen organometallischen Übergangskomplex bestehen und durch die Stickstoffatome zu aktiven Me-N₄-Kernen koordiniert sind. Durch die Kombination verschiedener Übergangsmetalle bei dem erfindungsgemäßen Chelat-Katalysatormaterial können deren vorteilhafte Eigenschaften additiv in unterschiedlichen Funktionen ausgenutzt werden. Zum einen kann durch geeignete Wahl der Übergangsmetalle, von denen die einen als Elektronengeber und die anderen als Chelatkerne in die Kohlenstoffmatrix eingebunden sind, die katalytische Aktivität, zum anderen die Stabilität bedeutend erhöht werden. Zu einer weiteren Erhöhung der katalytischen Aktivität trägt die zusätzlich vorgesehene Chalkogenkomponente bei dem erfindungsgemäßen Chelat-Katalysatormaterial bei. Über integrierte Chalkogenbrücken werden das erste und das koordinierte Übergangsmetall elektrisch leitend miteinander verbunden, sodass die Elektronen von dem elektronenspendenden Übergangsmetall zu dem katalytisch aktiven Übergangsmetall in den Chelatkernen besonders gut übertragen werden können.

Bei dem erfindungsgemäßen Chelat-Katalysatormaterial wird nur ein geringer Anteil des aus der eingesetzten Precursorverbindung während der Synthese hervorgehenden ersten Übergangsmetalls in die Kohlenstoffmatrix eingebunden. Der weitaus größere Anteil dient während der in-situ-Erzeugung der Kohlenstoffmatrix als Nanoporen bildendes Füllmaterial und wird in einem eigenen Verfahrensschritt nach deren Ausbildung wieder herausgewaschen (siehe unten). In diesem Punkt unterscheidet sich das erfindungsgemäße Katalysatormaterial von den oben beschriebenen Elektrokatalysatoren. Durch die zusätzliche Platzhalterfunktion des ersten Übergangsmetalls wird eine hochporöse Strukturierung der Kohlenstoffmatrix erzielt, die durch Vergrößerung der aktiven Oberfläche ebenfalls zu einer Erhöhung der Katalyseaktivität beiträgt. Somit wirkt das erste Übergangsmetall, zugegeben in Form eines Metalloxalats, als Aufschäumer während der Polymerisation des stickstoffhaltigen Übergangsmetallchelats. Des Weiteren ist das erfindungsgemäße Chelat-Katalysatormaterial nur aus wenigen Komponenten zusammen gesetzt, da der Stickstoff- und der Kohlenstoffgeber in einer gemeinsamen Materialkomponente vereinigt sind.

Das in der Erfindung beschriebene platinfreie Chelat-Katalysatormaterial lässt sich in der Kathode einer Brennstoffzelle einsetzen. Die Kosten des Materials betragen höchstens ein Zehntel der Kosten bei einem platinhaltigen Katalysatormaterial. Eine Anwendung des erfindungsgemäßen Materials trägt also zu einer wesentlichen Kostensenkung eines Brennstoffzellenmoduls in herkömmlicher Bauart, bei der nach wie vor die platinhaltigen Katalysatormaterialien eingesetzt werden, bei. Als weitere Vorteile des erfindungsgemäßen Chelat-Katalysatormaterials sind die unbegrenzte Verfügbarkeit der eingesetzten Komponenten und die Alkanolresistenz zu nennen, sodass ein Durchbruch von Methanol zur Kathode nicht zu einer Leistungsminderung der Brennstoffzelle führt.

Weitere Verbesserungen ergeben sich aus Fortführungen des erfindungsgemäßen Chelat-Katalysatormaterials gemäß der Unteransprüche. Hierbei kann es sich im Einzelnen darum handeln, dass das zumindest eine erste Gruppe-VIII-Übergangsmetall Eisen oder Ruthenium ist, Die Elemente dieser Gruppe zeigen eine besonders hohe katalytische Wirksamkeit sie werden oft als fein verteilte Teilchen eingesetzt. Ihre Gegenwart bewirkt nicht nur eine physikalische Anlagerung der reagierenden Substanzen an der Oberfläche (Adsorption), sondern außerdem eine chemische Aktivierung der adsorbierten Teilchen. Insbesondere Ruthenium hat eine mit Platin vergleichbare Aktivität, erreicht aber nicht dessen Kostenniveau. Es stellt eine vielversprechende Alternative zu Platin dar. Ruthenium ist zwar als Edelmetall von den Rohstoffkosten her teurer als einfache Übergangsmetalle und hat darüber hinaus eine geringere spezifische katalytische Aktivität. Es kann jedoch durch eine entsprechende Behandlung in der katalytischen Aktivität deutlich gesteigert werden. Eine Kombination verschiedener Übergangsmetalle ist möglich. Dabei können die Verbesserungen der Effekte sowohl durch lonenbildung als auch durch Bildung von Nanopartikeln aus den gewählten Übergangsmetallen erreicht werden. Insbesondere Ruthenium kann als eingesetztes erstes Übergangsmetall besonders kleine Nanopartikel bilden, die dann zu einer ultrahochporösen Kohlenstoffmatrix führen. Daneben ist Ruthenium ein guter Elektronengeber. Sein Einsatz führt also zu einer Steigerung sowohl der katalytischen Aktivität als auch der Stabilität.

Bei dem von dem zumindest ersten Gruppe-VIII-Übergangsmetall verschiedenen weiteren Gruppe-VIII-Übergangsmetallen in dem stickstoffhaltigen, organometallischen Übergangskomplex kann es sich gemäß einer weiteren Erfindungsfortführung um Kobalt oder Eisen handeln. Bei einer Kombination von Eisen als erstem Gruppe-VIII-Übergangsmetall und Kobalt als weiteren Gruppe-VIII-Übergangsmetall in dem stickstoffhaltigen organometallischen Übergangskomplex können in optimaler Weise deren Vorteile bei der Katalyse genutzt werden. Eisen, dessen positive Auswirkungen auf die Katalyse bereits weiter oben ausführlich erläutert wurden, ist ein sehr guter Elektronengeber. Es erhöht außerdem die Stabilität, Kobalt hingegen erhöht die Aktivität des Katalysatormaterials. Bei dem stickstoffhaltigen, organometallischen Übergangskomplex kann es sich vorteilhafterweise um ein Metalloporphyrin handeln. Dabei kann dieses Kobalt oder Eisen enthalten und insbesondere als Kobalttetramethoxyphenylporphyrin oder Eisentetramethoxyphenylporphyrin ausgebildet sein. Metalloporphyrine zeigen eine ausgezeichnete Katalysefähigkeit, weil die aktiven Übergangsmetalle durch vier Stickstoffbindungen frei im Raum koordiniert werden. Dadurch sind die Oberflächenzugänglichkeit und der Katalyseeffekt optimal. In der Kombination mit dem jeweils anderen Übergangsmetall als erstem Gruppe-VIII-Übergangsmetall erhöhen sich die Effekte noch. Dabei können im Metalloporphyrin auch beide oder mehrere Gruppe-VIII-Übergangsmetalle eingesetzt werden. Das Metalloporphyrin vereinigt den Stickstoff- und den Kohlenstoffgeber miteinander. Es polymerisiert in hochvernetzten Strukturen bereits bei moderaten Prozesstemperaturen in einem Bereich von 450 °C und bildet während der Synthese in-situ eine ultrahochporöse, aber stabile Kohlenstoffmatrix. Durch die in-situ-Herstellung wird eine besonders homogene Verteilung der Elektronengeber und der aktiven Kerne in der Kohlenstoffmatrix bewirkt, die eine gleichmäßig hohe Qualität des erfindungsgemäßen Chelat-Katalysatormaterials gewährleistet. Zur Unterstützung der Kohlenstoffmatrix kann aber auch vorgesehen sein, dass zusätzlich ein Kohlenstoffträger, insbesondere in Form von Ruß, zur Unterstützung der Bildung der Kohlenstoffmatrix enthalten ist. Beispielsweise kann ein elektronengebendes Übergangsmetall kohlenstoffgeträgert sein und so bei der adsorptiven Einbindung in die Kohlenstoffmatrix der Herstellung erleichtern und verbessern.

Die auf die elektrochemische Katalyse positiven Auswirkungen von Übergangsmetallen sind hinlänglich bekannt. Aber auch die bei dem Chelat-Katalysatormaterial nach der Erfindung zusätzlich eingesetzte organische Chalkogenverbindung hat einen wesentlichen Einfluss auf die katalytische Aktivität, insbesondere in Form einer katalytischen Initialwirkung. Dabei kann weiterhin vorteilhaft vorgesehen sein, dass das Chalkogen in elementarer Form (z.B. Schwefel) oder in Form einer organischen Chalkogenverbindung (z.B. Thioharnstoff) zugegeben wird. Die positiven Auswirkungen von Schwefel, insbesondere in der Funktion eines Brückenbildners, sind allgemein bekannt, bekannt ist auch seine gegenüber Selen geringere Toxizität und größere Verfügbarkeit. Deshalb kann es sich einer weiteren Erfindungsfortführung bei der organischen Chalkogenverbindung um Schwefelharnstoff handeln, der einfach synthetisierbar und vielfältig verwendbar ist. Harnstoff (OC(NH₂)₂) oder auch Carbamid enthält ebenfalls Stickstoff. Somit entsteht hier der weitere Vorteil, dass ein zusätzlicher Stickstoffgeber für die Koordinierung bei der Chelatbildung im erfindungsgemäßen Katalysatormaterial zur Verfügung steht.

Bei einem besonders einfachen und prozessgünstigen Verfahren zur Herstellung eines platinfreien Chelat-Katalysatormaterials für die selektive Sauerstoffreduktion gemäß Ansprüche 1 bis 8 sind die folgenden Verfahrensschritte vorgesehen :
- Mischen eines Gruppe-VIII-Übergangsmetalloxalates als Precursorverbindung für das erste Gruppe-VIII-Übergangsmetall mit dem stickstoffhaltigen, organometallischen Übergangskomplex und der organischen Chalkogenverbindung
- Erhitzen der Mischung auf eine Pyrolysetemperatur in einem Bereich von 450°C über einen Zeitraum von wenigen Stunden
- Abkühlen der polymerisierten Mischung und Vermischen mit einer Säure
- Sieden der Säuremischung über einen Zeitraum von einigen Minuten und anschließendes Abkühlen
- Absaugen des entstandenen Pulvers und Waschen mit deionisiertem Wasser
- Trocknen des pulverförmigen Chelat-Katalysatormaterials.

Bei der Herstellung des erfindungsgemäßen Chelat-Katalysatormaterial wird ein schwammartiges, übergangsmetallhaltiges Kohlenstoffgerüst dadurch erzeugt, dass ein feines Gruppe-VIII-Übergangsmetalloxalat-Pulver zunächst durch Mischen mit dem stickstoffhaltigen organometallischen Übergangskomplex und der organischen Chalkogenverbindung belegt wird. Das Gemisch wird dann einer Pyrolyse in einem moderaten Temperaturbereich von 450 °C unterzogen. Dabei verdampft zunächst das im Gruppe-VIII-Übergangsmetalloxalat gebundene Kristallwasser. Anschließend zersetzt sich die organische Chalkogenverbindung und es schmilzt der stickstoffhaltige organometallische Übergangskomplex. Dieser beginnt zu polymerisieren, wobei ein stark vernetztes und damit sehr stabiles Kohlenstoffgerüst aufgebaut wird. Bei diesem Prozess beginnt gleichzeitig eine Zersetzung des zumindest einen Gruppe-VIII-Übergangsmetalloxalates. Dabei werden unter Gasentwicklung Nanokristalle aus dem ersten Gruppe-VIII-Übergangsmetall gebildet. Ein Bruchteil des Gruppe-VIII-Übergangsmetalls wird jedoch auch fest in die Kohlestoffmatrix eingebunden. Das aus dem polymerisierenden stickstoffhaltigen organometallischen Übergangskomplex gebildete Kohlenstoffgerüst lagert sich um die Nanokristalle aus dem zumindest einen Übergangsmetall herum an. Bei der gewählten moderaten Prozesstemperatur bleibt die Koordinationssphäre für die MeN₄-Kerne weitgehend erhalten. Zwischen das Übergangsmetall und die Chelatkerne wird als elektrisch leitende Verbindungsbrücken das Chalkogen aus der organischen Chalkogenverbindung in die Kohlenstoffmatrix eingebunden. Die gebildeten Nanokristalle werden dann in einem für derartige Syntheseverfahren völlig neuen, nachfolgenden Schritt ausgewaschen und eine leitfähige, hochporöse übergangsmetall-, chalkogen- und stickstoffhaltige Kohlenstoffmatrix mit Nano- und Mikrostrukturen bleibt zurück.

Die gebildete hochporöse Kohlenstoffmatrix hat bereits eine sehr gute Stabilität und Aktivität zur selektiven Sauerstoffreduktion. Die Aktivität kann jedoch gemäß einer besonders vorteilhaften Verfahrensfortführung mit einem weiteren, vor oder nach dem Verfahrensschritt des Siedens der Säuremischung durchzuführenden Verfahrensschritt noch weiter gesteigert werden :
- Erhitzen des pulverförmigen Chelat-Katalysatormaterials unter Schutzatmosphäre auf eine Hochtemperatur in einem Bereich von 850 °C über einen Zeitraum von einer Stunde oder mehr.

Weiterhin kann vorgesehen sein, dass mit Eisenoxalat als Precursorverbindung zur Bereitstellung von Eisen als erstem Grupe-VIII-Übergangsmetall bereitgestellt wird. Oxalat ist das Salz der Oxalsäure, sehr reaktionsfreudig und kostengünstig großtechnisch zur Verfügung stellbar.

Im Folgenden soll durch die Erläuterung eines Ausführungsbeispiels und von Figuren die vorteilhafte Wirkungsweise des Chelat-Katalysatormaterials nach der Erfindung noch deutlicher aufgezeigt werden. Im Einzelnen zeigt die:
- **Figur 1**: eine thermogravimetrische Zersetzungskurve des ungeträgerten Metalls (Eisenoxalat) in Gegenwart des platinfreien Chelat-Katalysatormaterials,
- **Figur 2**: eine Rasterelektronenmikroskopaufnahme des platinfreien Chelat-Katalysatormaterials nach Ende der Präparation,
- **Figur 3**: ein EXAFS-Spektrum in Gegenwart des platinfreien Chelat-Katalysatormaterials und die
- **Figur 4**: ein Stromdichtediagramm des platinfreien Chelat-Katalysatormaterials im Vergleich zu einem Standard-Platinkatalysator.

### Ausführungsbeispiel

3,35 g Eisenoxalat FeC₂O₄*2H₂O als Precursorverbindung werden mit 0,65g Cobalttetramethoxyphenylporphyrin (CoTMPP) als stickstoffhaltiger, metallorganischer Übergangskomplex und 0,18 g Schwefelharnstoff als organische Chalkogenverbindung vermischt und für 2h auf 450°C sowie anschließend für 1h auf 850°C erhitzt. Die Mischung wird abgekühlt und unter ArgonAtmosphäre mit 300 ml 1N HCl Lösung suspendiert und anschließend für 30 min zum Sieden erhitzt. Nach dem Abkühlen wird das schwarze Pulver auf der Filtriereinrichtung abgesaugt und mit viel deionisiertem Wasser gewaschen. Das Pulver wird dann getrocknet.

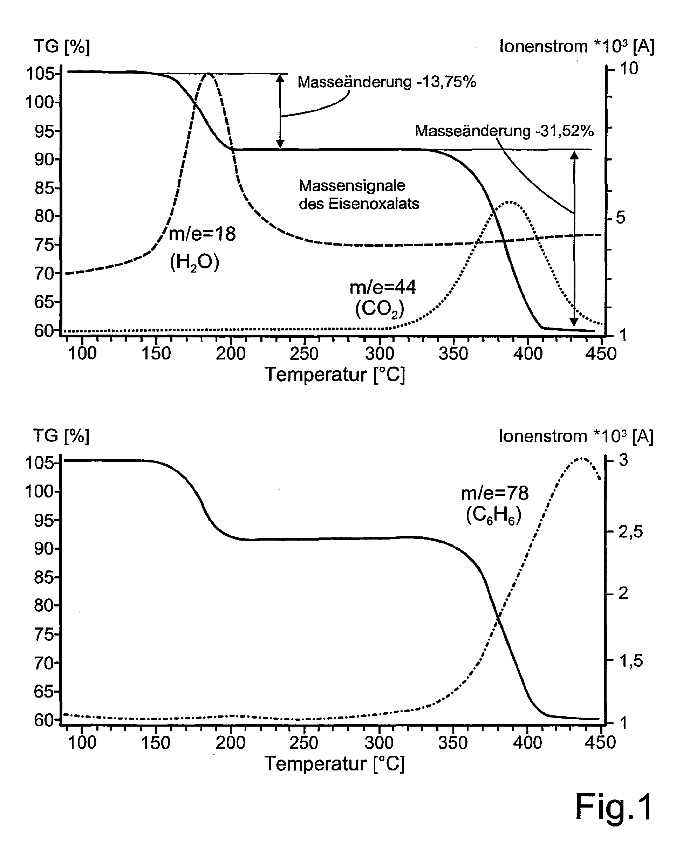

In dem Ausführungsbeispiel wird ein schwammartiges, eisenhaltiges Kohlenstoffgerüst dadurch erzeugt, dass ein feines Eisenoxalat- Pulver mit CoTMPP und Schwefelharnstoff belegt wird. Dieses Gemisch aus Eisenoxalat, CoTMPP und Schwefelharnstoff wird dann einer Temperaturbehandlung unterzogen. Dabei verdampft zunächst das im Eisenoxalat gebundene Kristallwasser. Anschließend zersetzt sich der Schwefelharnstoff. Das CoTMPP schmilzt und beginnt zu polymerisieren, wobei ein vernetztes Kohlenstoffgerüst aufgebaut wird. Vergleiche hierzu die **Figur 1**, die eine thermogravimetrische Kurve (Massenverlust TG, ausgezogen) der zweistufigen Zersetzung von KobaltTetramethoxyphenylporphyrin (CoTMPP) in Gegenwart von Eisenoxalat zeigt. In einer ersten Stufe wird Kristallwasser des Eisenoxalats abgegeben, angezeigt durch das simultan gemessene Massensignal m/e = 18 (gestrichelte Kurve im oberen Diagramm). In einer zweiten Stufe zersetzt sich Eisenoxalat (m/e = 44, CO₂-Bildung, punktierte Kurve im oberen Diagramm) und im selben Temperaturintervall auch CoTMPP, dokumentiert durch die Masse m/e = 78 (C₆H₆-Bildung, strichpunktierte Kurve im unteren Diagramm).

Bei dem Polymerisierungsprozess beginnt gleichzeitig die Zersetzung des Eisenoxalats. Dabei werden unter CO₂- und CO- Gasentwicklung Eisen(II)-Oxid (FeO) Nanokristalle gebildet, ein Bruchteil des Eisens wird jedoch auch fest in die Kohlestruktur eingebunden. Das aus dem polymerisierendem CoTMPP gebildete Kohlenstoffgerüst lagert sich dabei um diese Nanokristalle herum an. Bei der Temperatur, bei der diese Prozesse ablaufen, bleibt die Koordinationssphäre der Kobalt- Ionen weitgehend erhalten. Der aus dem Schwefelharnstoff frei werdende Schwefel wird als elektrisch leitende Verbindungsbrücke zwischen dem elektronengebenden Eisen und dem katalytisch aktiven Kobaltchelat in die Kohlenstoffmatrix integriert. Die bei der Zersetzung ebenfalls frei werdenden Stickstoffatome werden neben den Stickstoffatomen aus dem CoTMPP zusätzlich bei der Koordinierung der Kobaltatome zu den Chelatkernen eingesetzt. Die gebildeten FeO-Kristalle werden dann in einem nachfolgenden Schritt ausgewaschen und eine leitfähige, hochporöse eisen-, kobalt-, stickstoff- und schwefelhaltige Kohlenstoffmatrix bleibt zurück. Dieses Substrat hat bereits eine sehr gute Aktivität zur Sauerstoffreduktion. Die Aktivität kann jedoch noch durch eine weitere Temperaturbehandlung bei 850°C gesteigert werden.

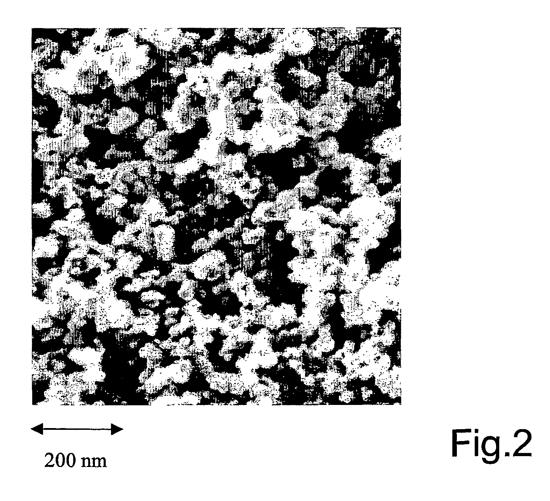

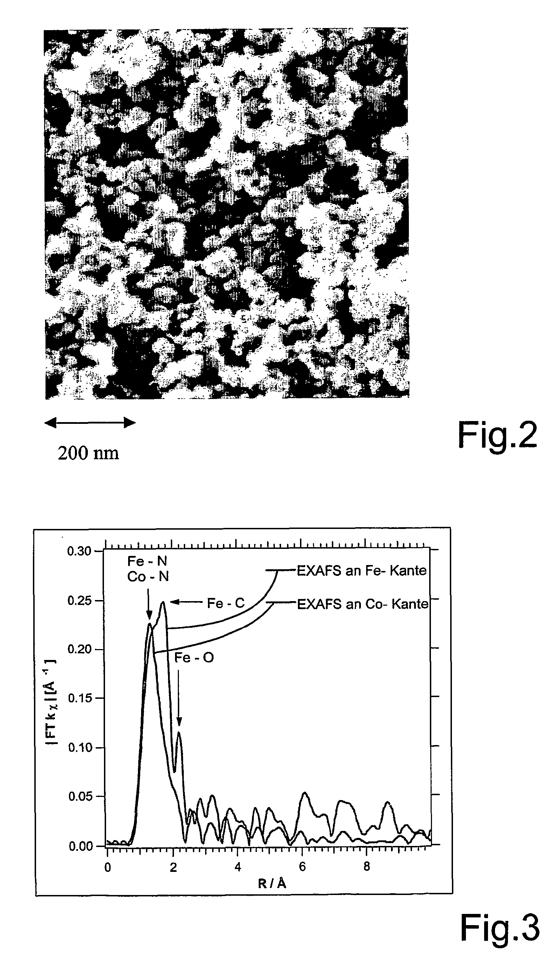

Um die Porosität des katalytischen Materials beurteilen zu können, wurde die spezifische Kapazität des Katalysatormaterials nach der Erfindung in elektrochemischen Experimenten unter Stickstoff bestimmt. Es wurden Kapazitäten zwischen 100 und 300 F/g erzielt. Diese Werte sind in der Größenordnung von kommerziellen, hochporösen Kohlenstoffrußen. Außerdem bestätigen Untersuchungen mit dem Rasterelektronenmikroskop die hohe Porosität des Materials bis hinein in den Nanometer-Bereich. Vergleiche hierzu **Figur 2**, die eine rasterelektronenmikroskopische Abbildung des erfindungsgemäßen Katalysatormaterials nach einer Säurebehandlung zeigt. Deutlich ist die hochporöse Struktur zu erkennen.

In der Katalysatorforschung gilt es als etabliert, dass Übergangselemente katalytisch wirken, da bei deren Abwesenheit keine chemischen Umsätze stattfinden. Auch die Existenz des Elektrons und deren zwingende Beteiligung an chemischen Reaktionen ist wissenschaftlich unstrittig. Mittels Extended X-Ray Absorption Fine Structure (EXAFS) - Analyse unter Nutzung von Synchrotronstrahlung konnten die Abstände der Übergangsmetalle zu den Elementen Stickstoff, Kohlenstoff und Sauerstoff im Katalysatormaterial nach der Erfindung vermessen werden. Vergleiche hierzu die **Figur 3**, die fouriertransformierte EXAFS-Spektren an der Fe- und der Co-Kante eines kohlenstoffgeträgerten Fe-Co-Katalysators zeigt, der durch Pyrolyse von CoTMPP in Gegenwart von Eisenoxalat hergestellt wurde. Um reine Metallpartikel zu entfernen, wurde der Katalysator vor der Messung in Säure geätzt. Aus den gefundenen Peaklagen lässt sich im Katalysatormaterial neben Metall-Kohlenstoff (Carbide) und Metall-Sauerstoff (Oxide) auch auf die Existenz von Metall-Stickstoff-Bindungen (Nitride) schließen, die als in einen in-situgebildeten Kohlenstoffträger integrierte Kerne vormalig Stickstoff-koordinierter Übergangsmetallchelate angesehen werden.

### Elektrochemische Charakterisierung

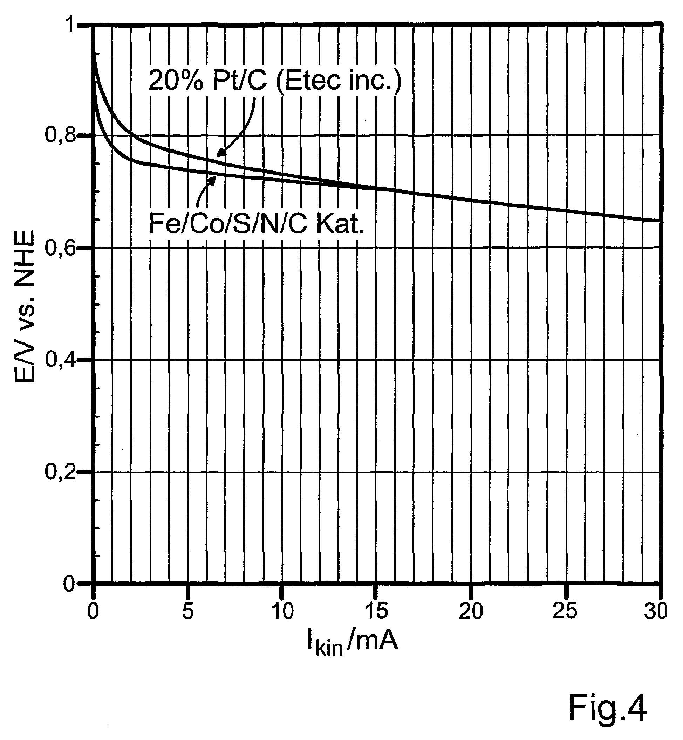

10 mg des so erhaltenen Chelat-Katalysatorpulvers werden in einer Mischung aus 1 ml einer ethanolischen 0,2% NAFION Lösung und 1 ml deionisiertem Wasser vermischt und 30 min im Ultraschallbad suspendiert. 5 µl dieser Suspension werden dann auf eine polierte Glassy Carbon Elektrode mit einem Durchmesser von 1 mm pipettiert und an Luft getrocknet. Die so präparierte Arbeitselektrode wird in einer elektrochemischen Messzelle in einer 3 Elektroden-Anordnung mit einer Quecksilbersulfatelektrode als Referenzelektrode und einem Platindraht als Gegenelektrode in 0,5 M H₂SO₄- Lösung als Elektrolyt in O₂-gesättigter Lösung vermessen. Die diffusionskorrigierten Stromdichten als Funktion der Potentialdifferenz zwischen Arbeits- und Gegenelektrode sind in der **Figur 4** im Vergleich zu einem Standard Platinkatalysator (20% Platin auf Vulcan XC 72R von Etek incorp., obere Kennlinie) dargestellt.

Die Spannungsdifferenzen gegenüber dem Etek-Katalysator betragen
- 60 mV bei 0,2 mA/cm²,
- 40 mV bei 2 mA/cm²,
- 20 mV bei 10 mA/cm²,
- 0 mV bei 20 mA/cm²

Die gemessenen Spannungsdifferenzen nehmen mit zunehmender Stromdichte ab und sind insgesamt gegenüber dem Stand dem Technik als äußerst gering einzustufen. Dadurch weist das platinfreie Chelat-Katalysatormaterial nach der Erfindung nahezu die gleiche katalytische Aktivität auf wie ein gebräuchliches Standard-Katalysatormaterial unter Verwendung von kostenintensivem Platin.

## Patentansprüche

1. Platinfreies Chelat-Katalysatormaterial für die selektive Sauerstoffreduktion mit zumindest einem Gruppe-VIII-Übergangsmetall, einer Stickstoff- und einer Kohlenstoffkomponente in einer leitfähigen Kohlenstoffmatrix, in die mindestens ein durch den Stickstoff koordiniertes Übergangsmetallchelat als Katalysezentrum eingebunden ist,
**dadurch gekennzeichnet, dass**
die Stickstoff- und die Kohlenstoffkomponente gemeinsam als stickstoffhaltiger organometallischer Gruppe-VIII-Übergangskomplex mit einem zu dem ersten Gruppe-VIII-Übergangsmetall verschiedenen, weiteren Gruppe-VIII-Übergangsmetall ausgebildet sind, wobei das weitere Übergangsmetall durch Stickstoff im Übergangsmetallchelat koordiniert wird, und dass eine organische Chalkogenverbindung als elektronenleitender Brückenbildner zwischen dem in der Kohlenstoffstoffmatrix nur vereinzelt auftretenden, erste Gruppe-VIII-Übergangsmetall und dem koordinierten Übergangsmetallchelat ebenfalls in die Kohlenstoffmatrix eingebunden ist, und dass die Kohlenstoffmatrix schwammartig porös ausgebildet ist, wobei diese Struktur erhältlich ist durch die Verfahrensschritte :
• Mischen eines Gruppe-VIII-Übergangsmetalloxalats als Precursorverbindung für das erste Gruppe-VIII-Übergangsmetall mit dem stickstoffhaltigen, organometallischen Übergangskomplex und der organischen Chalkogenverbindung,
• Erhitzen der Mischung auf eine Pyrolysetemperatur in einem Bereich von 450°C über einen Zeitraum von wenigen Stunden,
• Abkühlen der polymerisierten Mischung und Vermischen mit einer Säure
• Sieden der Säuremischung über einen Zeitraum von einigen Minuten und anschließendes Abkühlen,
• Absaugen des entstandenen Pulvers und Waschen mit deionisiertem Wasser und
• Trocknen des pulverförmigen Chelat-Katalysatormaterials

2. Platinfreies Chelat-Katalysatormaterial nach Anspruch 1,
**dadurch gekennzeichnet, dass**
das zumindest das erste Gruppe-VIII-Übergangsmetall Eisen oder Ruthenium ist.

3. Platinfreies Chelat-Katalysatormaterial nach Anspruch 1 oder 2,
**dadurch gekennzeichnet, dass**
das von dem zumindest ersten Gruppe-VIII-Übergangsmetall verschiedene weitere Übergangsmetall in dem stickstoffhaltigen, organometallischen Übergangskomplex Kobalt oder Eisen ist.

4. Platinfreies Chelat-Katalysatormaterial nach einem der Ansprüche 1 bis 3,
**dadurch gekennzeichnet, dass**
der stickstoffhaltige, organometallische Übergangskomplex ein Metalloporphyrin ist.

5. Platinfreies Katalysatormaterial nach Anspruch 4,
**dadurch gekennzeichnet, dass**
das Metalloporphyrin Kobalt oder Eisen enthält und insbesondere als Kobalttetramethoxyphenylporphyrin (CoTMPP) oder Eisentetramethoxyphenylporphyrin (FeTMPP) ausgebildet ist.

6. Platinfreies Chelat-Katalysatormaterial nach einem der Ansprüche 1 bis 5,
**dadurch gekennzeichnet, dass**
eine zusätzliche Kohlenstoffkomponente, insbesondere in Form von Ruß, zur Unterstützung der Bildung der Kohlenstoffmatrix enthalten ist.

7. Platinfreies Chelat-Katalysatormaterial nach einem der Ansprüche 1 bis 6,
**dadurch gekennzeichnet, dass**
das Chalkogen in der organischen Chalkogenverbindung Schwefel ist.

8. Platinfreies Chelat-Katalysatormaterial nach Anspruch 8,
**dadurch gekennzeichnet, dass**
die organische Chalkogenverbindung Schwefelharnstoff ist.

9. Verfahren zur Herstellung eines platinfreien Chelat-Katalysatormaterials für die selektive Sauerstoffreduktion gemäß Anspruche 1 bis 8 mit den Verfahrensschritten :
• Mischen eines Gruppe-VIII-Übergangsmetalloxalates als Precursorverbindung für das erste Gruppe-VIII-Übergangsmetall mit dem stickstoffhaltigen, organometallischen Übergangskomplex und der organischen Chalkogenverbindung
• Erhitzen der Mischung auf eine Pyrolysetemperatur in einem Bereich von 450°C über einen Zeitraum von wenigen Stunden
• Abkühlen der polymerisierten Mischung und Vermischen mit einer Säure
• Sieden der Säuremischung über einen Zeitraum von einigen Minuten und anschließendes Abkühlen
• Absaugen des entstandenen Pulvers und Waschen mit deionisiertem Wasser
• Trocknen des pulverförmigen Chelat-Katalysatormaterials.

10. Verfahren zur Herstellung eines platinfreien Chelat-Katalysatormaterials nach Anspruch 9 mit einem weiteren, vor oder nach dem Verfahrensschritt des Siedens der Säuremischung durchzuführenden Verfahrensschritt :
• Erhitzen des pulverförmigen Chelat-Katalysatormaterials unter Schutzatmosphäre auf eine Hochtemperatur in einem Bereich von 850 °C über einen Zeitraum von einer Stunde oder mehr.

11. Verfahren zur Herstellung eines platinfreien Chelat-Katalysatormaterials nach Anspruch 9 oder 10 mit Eisenoxalat als Precursorverbindung zur Bereitstellung von Eisen als Gruppe-VIII-Übergangsmetall.

## Claims

1. Platinum-free chelate catalyst material for selective oxygen reduction with at least one group VIII transition metal, a nitrogen component and a carbon component in a conductive carbon matrix, into which at least one transition metal chelate coordinated by the nitrogen is integrated as catalytic centre,
**characterised in that**
the nitrogen component and the carbon component together are developed as nitrogen-containing organometallic group VIII transition complex with another group VIII transition metal different to the first group VIII transition metal, wherein the other transition metal is coordinated by nitrogen in the transition metal chelate, and that an organic chalcogen compound is likewise integrated into the carbon matrix as electron-conducting bridge former between the first group VIII transition metal occurring only occasionally in the carbon matrix and the coordinated transition metal chelate, and that the carbon matrix is developed sponge-like porous, wherein this structure is obtainable by the process steps :
• mixing a group VIII transition metal oxalate as precursor compound for the first group VIII transition metal with the nitrogen-containing, organometallic transition complex and the organic chalcogen compound,
• heating the mixture to a pyrolysis temperature in a range of 450°C over a period of a few hours,
• cooling the polymerised mixture and mixing with an acid
• boiling the acid mixture over a period of minutes and subsequent cooling,
• suction-filtering the powder produced and washing with deionised water and
• drying the powder-form chelate catalyst material.

2. Platinum-free chelate catalyst material according to claim 1,
**characterised in that**
the at least the first group VIII transition metal is iron or ruthenium.

3. Platinum-free chelate catalyst material according to claim 1 or 2,
**characterised in that**
the other transition metal different from the at least first group VIII transition metal in the nitrogen-containing, organometallic transition complex is cobalt or iron.

4. Platinum-free chelate catalyst material according to one of claims 1 to 3,
**characterised in that**
the nitrogen-containing, organometallic transition complex is a metalloporphyrin.

5. Platinum-free catalyst material according to claim 4,
**characterised in that**
the metalloporphyrin contains cobalt or iron and in particular is developed as cobalt tetramethoxyphenylporphyrin (CoTMPP) or iron tetramethoxyphenylporphyrin (FeTMPP).

6. Platinum-free chelate catalyst material according to one of claims 1 to 5,
**characterised in that**
an additional carbon component, in particular in the form of carbon black, is contained to support the formation of the carbon matrix.

7. Platinum-free chelate catalyst material according to one of claims 1 to 6,
**characterised in that**
the chalcogen in the organic chalcogen compound is sulfur.

8. Platinum-free chelate catalyst material according to claim 8,
**characterised in that**
the organic chalcogen compound is sulfourea.

9. Process for the production of a platinum-free chelate catalyst material for selective oxygen reduction according to claims 1 to 8 with the process steps :
• mixing a group VIII transition metal oxalate as precursor compound for the first group VIII transition metal with the nitrogen-containing, organometallic transition complex and the organic chalcogen compound,
• heating the mixture to a pyrolysis temperature in a range of 450°C over a period of a few hours,
• cooling the polymerised mixture and mixing with an acid
• boiling the acid mixture over a period of a few minutes and subsequent cooling,
• suction-filtering the powder produced and washing with deionised water and
• drying the powder-form chelate catalyst material.

10. Process for the production of a platinum-free chelate catalyst material according to claim 9 with a further process step to be carried out before or after the process step of boiling the acid mixture :
• heating the powder-form chelate catalyst material under protective atmosphere to a high temperature in a range of 850°C over a period of one hour or more.

11. Process for the production of a platinum-free chelate catalyst material according to claim 9 or 10 with iron oxalate as precursor compound for the provision of iron as group VIII transition metal.

## Revendications

1. Matériau catalyseur au chélate, exempt de platine, pour la réduction sélective de l'oxygène, avec au moins un métal de transition du groupe VIII, un composant d'azote et un composant de carbone d'une matrice de carbone conductrice, dans laquelle au moins un chélate du métal de transition coordonné par l'azote est lié sous la forme de centre de catalyse,
**caractérisé en ce que**
le composant d'azote et le composant de carbone sont réalisés ensemble sous la forme d'un complexe de transition du groupe VIII, organométallique et contenant de l'azote, avec un autre métal de transition du groupe VIII différent du premier métal de transition du groupe VIII, l'autre métal de transition est coordonné par l'azote dans le chélate du métal de transition, et un composé organique de chalcogène est également intégré dans la matrice de carbone sous la forme d'un formateur de ponts conducteur électronique entre le premier métal de transition du groupe VIII n'apparaissant que sous forme dispersée dans la matrice de carbone et le chélate du métal de transition coordonné, et la matrice de carbone est poreuse à la façon d'une éponge, cette structure pouvant être obtenue par les opérations suivantes:
• mélange d'un oxalate de métal de transition du groupe VIII comme composé précurseur pour le premier métal de transition du groupe VIII avec le complexe de transition organométallique contenant de l'azote et avec le composé organique de chalcogène,
• chauffage du mélange à une température de pyrolyse de l'ordre de 450°C pendant quelques heures,
• refroidissement du mélange polymérisé et mélange avec un acide,
• ébullition du mélange acide pendant quelques minutes et ensuite refroidissement,
• aspiration de la poudre obtenue et lavage avec de l'eau déminéralisée, et
• séchage du matériau catalyseur au chélate pulvérulent.

2. Matériau catalyseur au chélate, exempt de platine, selon la revendication 1,
**caractérisé en ce qu'**
au moins le premier métal de transition du groupe VIII est le fer ou le ruthénium.

3. Matériau catalyseur au chélate, exempt de platine, selon la revendication 1 ou 2,
**caractérisé en ce que**
l'autre métal de transition du groupe VIII dans le complexe de transition organométallique et contenant de l'azote, différent du premier métal de transition du groupe VIII, est le cobalt ou le fer.

4. Matériau catalyseur au chélate, exempt de platine, selon l'une quelconque des revendications 1 à 3,
**caractérisé en ce que**
le complexe de transition organométallique et contenant de l'azote est une métalloporphyrine.

5. Matériau catalyseur au chélate, exempt de platine, selon la revendication 4,
**caractérisé en ce que**
la métalloporphyrine contient du cobalt ou du fer et est formée en particulier par la tétraméthoxyphénylporphyrine de cobalt (CoTMPP) ou la tétraméthoxyphénylporphyrine de fer (FeTMPP).

6. Matériau catalyseur au chélate, exempt de platine, selon l'une quelconque des revendications 1 à 5,
**caractérisé en ce qu'**
un composant de carbone supplémentaire, en particulier sous la forme de suie, est présent pour renforcer la formation de la matrice de carbone.

7. Matériau catalyseur au chélate, exempt de platine, selon l'une quelconque des revendications 1 à 6,
**caractérisé en ce que**
le chalcogène dans le composé organique de chalcogène est le soufre.

8. Matériau catalyseur au chélate, exempt de platine, selon la revendication 7,
**caractérisé en ce que**
le composé organique de chalcogène est l'urée sulfurée.

9. Procédé de fabrication d'un matériau catalyseur au chélate, exempt de platine, pour la réduction sélective de l'oxygène, selon l'une quelconque des revendications 1 à 8, comprenant les opérations suivantes:
• mélange d'un oxalate de métal de transition du groupe VIII comme composé précurseur pour le premier métal de transition du groupe VIII avec le complexe de transition organométallique contenant de l'azote et avec le composé organique de chalcogène,
• chauffage du mélange à une température de pyrolyse de l'ordre de 450°C pendant quelques heures,
• refroidissement du mélange polymérisé et mélange avec un acide,
• ébullition du mélange acide pendant quelques minutes et ensuite refroidissement,
• aspiration de la poudre obtenue et lavage avec de l'eau déminéralisée, et
• séchage du matériau catalyseur au chélate pulvérulent.

10. Procédé de fabrication d'un matériau catalyseur au chélate, exempt de platine, selon la revendication 9, avec une autre opération à exécuter avant ou après l'opération d'ébullition du mélange acide:
• chauffage du matériau catalyseur au chélate pulvérulent sous atmosphère protectrice, à une haute température de l'ordre de 850°C pendant une heure ou plus.

11. Procédé de fabrication d'un matériau catalyseur au chélate, exempt de platine, selon la revendication 9 ou 10, avec l'oxalate de fer comme composé précurseur pour la préparation de fer comme métal de transition du groupe VIII.
